(19) Europäisches Patentamt
European Patent Office
Office européen des brevets

(11) **EP 4 703 441 A1**

(12) **EUROPEAN PATENT APPLICATION**

(43) Date of publication:
04.03.2026 Bulletin 2026/10

(21) Application number: 25197057.0

(22) Date of filing: 20.08.2025

(51) International Patent Classification (IPC):
*C09D 11/322* (2014.01)    *C09D 11/38* (2014.01)

(52) Cooperative Patent Classification (CPC):
C09D 11/38; C09D 11/322

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 26.08.2024 JP 2024144024

(71) Applicant: KYOCERA Document Solutions Inc.
Osaka-shi, Osaka 540-8585 (JP)

(72) Inventor: ISHIDA, Azumi
Osaka-shi, Osaka, 540-8585 (JP)

(74) Representative: Viering, Jentschura & Partner
mbB
Patent- und Rechtsanwälte
Grillparzerstraße 14
81675 München (DE)

(54) **INK**

(57)    An ink includes: a surfactant having a main skeleton represented by the following general formula (1); a water-soluble solvent having a log Kow of -1.0 or more and 0.85 or less; a pigment; and water. A content of the water-soluble solvent is 20 mass% or more and 50 mass% or less.

$$HO[CH_2CH_2O]_x-[CH_2CH_2CH_2CH_2O]_y-[CH_2CH_2O]_xOH \cdots \qquad (1)$$

(In the general formula (1), x represents an integer of 4 or more and 10 or less, and y represents an integer of 1 or more and 5 or less.)

EP 4 703 441 A1

**Description**

**Field**

The present disclosure relates to an ink for recording an image on a recording medium.

**Background**

In inks for recording images on recording media such as paper, pigments in the solvent favorably have high dispersibility in order to improve the preservation stability before use. Meanwhile, in such inks, it is favorable that the pigments are highly agglomerated on the recording medium in order to improve the density of the image recorded on the recording medium. That is, in such inks, in order to achieve both the preservation stability and image density, the behaviors of the pigments opposed to each other in the solvent and on the recording medium are necessary.

Japanese Patent No. 6687899 discloses an ink capable of achieving the preservation stability and image density. This ink includes two types of compounds, i.e., a compound having the effect of improving the preservation stability and a compound having the effect of improving the image density. Specifically, the former enhances the dispersibility of pigments in the solvent by forming $\pi$-$\pi$ stacking with the pigment. The latter enhances the affinity between the cellulose fiber forming the recording medium and the pigment.

**Summary**

According to an embodiment of the present invention, there is provided an ink, including: a surfactant represented by the following general formula (1); a water-soluble solvent having a log Kow of -1.0 or more and 0.85 or less; a pigment; and water.

A content of the water-soluble solvent is 20 mass% or more and 50 mass% or less.

(Chem. 1)

(In the general formula (1), x represents an integer of 4

$$HO[CH_2CH_2O]x\text{-}[CH_2CH_2CH_2CH_2O]y \text{ - } [CH_2CH_2O]xOH \cdots \qquad (1)$$

or more and 10 or less, and y represents an integer of 1 or more and 5 or less.)

**Detailed Description**

In the ink described in the above Background, two types of compounds are additionally used in order to improve the two types of performance of preservation stability and image density. However, from the viewpoints of the number of production processes and cost, it is advantageous to use fewer types of raw materials for ink. Further, the Background does not consider the compatibility between the solvent and the compound, and it is conceivable that the preservation stability cannot be assured depending on the property of the solvent in the case of the ink described in the Background.

In view of the circumstances as described above, it is desired to provide an ink capable of achieving both preservation stability and image density.

An embodiment of the present disclosure will be described.

[Configuration of ink]

(Schematic configuration)

An ink according to an embodiment of the present disclosure includes a surfactant a, a water-soluble solvent b, a pigment c, and water. The ink according to this embodiment is typically a water-based ink that is ejected onto a recording medium from a recording head of an inkjet recording apparatus to record an image on the recording medium. Examples of the recording medium on which an image is recorded by the ink according to this embodiment include plain paper, copy paper, recycled paper, thin paper, thick paper, glossy paper, and OHP.

In the ink according to this embodiment, high preservation stability is achieved by using the surfactant a having a specific configuration and high image density is achieved by using the water-soluble solvent b having a specific configuration. That is, in the ink according to this embodiment, the effects of the surfactant a and the water-soluble solvent b realize the achievement of both the preservation stability and the image density. Details of each component of the ink according to this embodiment will be described below.

(Surfactant a)

In the ink according to this embodiment, the surfactant a represented by the following general formula (1) is used. The surfactant a has a butylene oxide chain forming the central portion thereof and ethylene oxide chains arranged on both sides of the butylene oxide chain. The surfactant a is oriented in the solvent such that the butylene oxide chain faces the side of the pigment c and the ethylene oxide chain faces the side of the solvent. The surfactant a acts to disperse the pigment c in the solvent by the adsorption of the butylene oxide chain to the pigment c. In the ink according to this embodiment, the effect of the surfactant a achieves high preservation stability.
(Chem. 2)
(In the general formula (1), x represents an integer of 4

$$HO[CH_2CH_2O]x\text{-}[CH_2CH_2CH_2CH_2O]y\text{-}[CH_2CH_2O]xOH \cdots \qquad (1)$$

or more and 10 or less, and y represents an integer of 1 or more and 5 or less.)
In the general formula (1), when x is 3 or less or 11 or more, the effect of the surfactant a is difficult to achieve. Further, in the general formula (1), when y is 6 or more, the contribution of the hydrophobic butylene oxide chain becomes excessive, making the surfactant a difficult to dissolve in water. Therefore, in the ink according to this embodiment, by setting x to 4 or more and 10 or less and y to 1 or more and 5 or less in the general formula (1), it is possible to effectively achieve the effect of enhancing preservation stability by the surfactant a.
In the ink according to this embodiment, the content of the surfactant a is favorably 0.1 mass% or more in order to sufficiently achieve the above effect of the surfactant a. Further, in the ink according to this embodiment, the content of the surfactant a is favorably 1.0 mass% or less from the viewpoints of preventing foaming and suppressing a decrease in ejection stability due to the entry of bubbles into the recording head.

(Water-soluble solvent b)

In the ink according to this embodiment, the use of the water-soluble solvent b having relatively high hydrophobicity causes the pigment c to agglomerate easily on the recording medium. As a result, in the ink according to this embodiment, high image density on the recording medium is achieved. That is, it is possible to record a clear image with high visibility on the recording medium. The water-soluble solvent b has a log Kow of -1.0 or more, favorably 0.4 or more, from the viewpoint of achieving high image density on the recording medium. Further, the water-soluble solvent b has a log Kow of 0.85 or less from the viewpoint of achieving solubility in water.
In the ink according to this embodiment, the content of the water-soluble solvent b is 20 mass% or more in order to sufficiently achieve the above effect of the water-soluble solvent b. Further, in the ink according to this embodiment, the content of the water-soluble solvent b is 50 mass% or less from the viewpoints of achieving ejection stability and suppressing a decrease in ejection stability due to agglomeration of the pigment.

(Pigment c)

The ink according to this embodiment includes the pigment c as a coloring agent from the viewpoints of color mixing prevention and improvement in water resistance in the image recorded on the recording medium. The pigment c may be either an inorganic pigment or an organic pigment. Further, as the pigment c, these may be combined with an extender pigment as necessary.
Specific examples of the inorganic pigment that can be used in the ink according to this embodiment include carbon black and a metal oxide. In particular, in the case of a black ink, carbon black is favorable. Examples of the carbon black include furnace black, thermal lamp black, acetylene black, and channel black.
Specific examples of the organic pigment that can be used in the ink according to this embodiment include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, and a quinophthalone pigment.
In the ink according to this embodiment, the hue is not particularly limited, and a colored pigment of any of colors such as yellow, magenta, cyan, blue, red, orange, and green can be used. Favorable specific examples of the colored pigment include C.I. Pigment Yellow, C.I. Pigment Red, C.I. Pigment Orange, C.I. Pigment Violet, C.I. Pigment Blue, and C.I. Pigment Green. In the ink according to this embodiment, one or more selected from these colored pigments can be used as the pigment c.

(Water)

In the ink according to this embodiment, ion exchanged water, purified water, distilled water, or the like can be used as water. In the ink according to this embodiment, the content of water is favorably 40 mass% or more and 70 mass% or less from the viewpoints of dryness and ejection reliability.

(Other components)

In the ink according to this embodiment, components other than the above may be blended as necessary. For example, in the ink according to this embodiment, a dispersant having the effect of enhancing the dispersibility of the pigment c in the solvent can be blended. As the dispersant, a pigment dispersion resin, a surfactant, or the like can be used.

The pigment dispersion resin is resin fine particles and is adsorbed on the surface of the pigment c to enhance the dispersibility of the pigment c in the solvent. The molecular weight of the pigment dispersion resin is favorably approximately several ten thousand. Examples of the pigment dispersion resin include an acrylic resin, a styrene-acrylic resin, a styrene-maleic acid resin, and a urethane resin. Of these, the styrene-acrylic resin is favorable. The pigment dispersion resin favorably has an acid value of 150 mg KOH/g or more from the viewpoints of improving the dispersibility of the pigment c in the solvent, micronization, enhancing the color development/coloration power of the pigment c, and the like. Meanwhile, the pigment dispersion resin favorably has an acid value of 300 mg KOH/g or less from the viewpoint of improving the preservation stability of the ink.

The surfactant to be blended as a dispersant is blended separately from the surfactant a and enhances the dispersibility of the pigment c in the solvent by reducing the interfacial tension between the pigment c and the solvent. As such a surfactant, for example, a nonionic surfactant or an anionic surfactant can be used.

Further, in the ink according to this embodiment, various additives such as a dissolution stabilizer, an anti-drying agent, an antioxidant, a viscosity adjustor, a pH adjuster, a neutralizer, and an antifungal agent may be blended as necessary in addition to the dispersant.

[Examples and Comparative Examples]

As Examples and Comparative Examples of the present disclosure, inks were prepared and evaluated.

(Preparation of ink)

First, a pigment dispersion liquid including the pigment c dispersed in water was prepared. The pigment dispersion liquid was prepared by blending the pigment c, a pigment dispersion resin, sodium hydroxide, OLFINE (registered trademark) E1010, and water such that the content shown in Table 1 was achieved.

(Table 1)

| Component | Content (mass%) |
|---|---|
| Pigment c | 15 |
| Pigment dispersion resin | 6.0 |
| Sodium hydroxide | 0~1.0 |
| OLFINE E1010 | 0.5 |
| Water | Remainder |

As the pigment dispersion resin, a styrene-acrylic resin that has a molecular weight of 20,000 and an acid value of 100 mg KOH/g was used. Sodium hydroxide was blended as a neutralizer for neutralizing the pigment dispersion resin. OLFINE (registered trademark) E1010 is the surfactant to be blended as a dispersant and is a nonionic surfactant manufactured by Nissin Chemical Co., Ltd. As water, ion exchanged water was used.

The pigment dispersion liquid was prepared by mixing the above components by wet dispersion using a media-type wet disperser. Examples of the media-type wet disperser include a wet disperser (more specifically, "Nano Grain Mill" manufactured by ASADA IRON WORKS.CO., LTD., "MSC mill" manufactured by NIPPON COKE & ENGINEERING. CO., LTD., "DYNO (registered trademark)-MILL" manufactured by Shinmaru Enterprises Corporation, and the like).

In the wet dispersion using a media-type wet disperser, media (zirconia beads having a diameter of 0.5 mm) were set in a vessel and the ejection rate was controlled at 200 to 600 g/min to adjust the average particle diameter of the pigment dispersion including the dispersant adhered to the pigment c dispersed in water to 70 to 130 nm. The grain size distribution of the pigment dispersion was measured using "Zetasizer Nano" manufactured by Sysmex Corporation with a diluted solution obtained by diluting the pigment dispersion liquid 300 times with ion exchanged water.

Next, inks according to Examples and Comparative Examples were prepared. The inks according to Examples and Comparative Examples were prepared by blending the above pigment dispersion liquid, surfactant a, water-soluble solvent b, and water such that the content shown in Table 2 was achieved. Further, the surfactant a and the water-soluble solvent b used in Examples and Comparative Examples are shown in Table 3. Note that x and y in Table 3 respectively indicate x and y in the above general formula (1). Further, Table 3 also shows the log Kow of the water-soluble solvent b, which was obtained from the calculation software "HSPiP". As water, ion exchanged water was used.

(Table 2)

| Component | Content (mass%) |
|---|---|
| Pigment dispersion liquid | 8 |
| Surfactant a | 0.5 |
| Water-soluble solvent b | 40 |
| Water | Remainder |

(Table 3)

|  |  | Surfactant a | | Water-soluble solvent b | |
|---|---|---|---|---|---|
|  |  | x | y | Name | log Kow |
| Example | 1 | 6 | 3 | Propylene glycol | -0.92 |
|  | 2 | 6 | 3 | Triethylene glycol monobutyl ether | 0.44 |
|  | 3 | 6 | 3 | Ethylene glycol monobutyl ether | 0.83 |
|  | 4 | 4 | 3 | Triethylene glycol monobutyl ether | 0.44 |
|  | 5 | 10 | 3 | Triethylene glycol monobutyl ether | 0.44 |
|  | 6 | 6 | 1 | Triethylene glycol monobutyl ether | 0.44 |
|  | 7 | 6 | 5 | Triethylene glycol monobutyl ether | 0.44 |
| Comparative Example | 1 | 6 | 3 | 1,3-propanediol | -1.04 |
|  | 2 | 6 | 3 | 1-butanol | 0.88 |
|  | 3 | 3 | 3 | Triethylene glycol monobutyl ether | 0.44 |
|  | 4 | 11 | 3 | Triethylene glycol monobutyl ether | 0.44 |
|  | 5 | 6 | 6 | Triethylene glycol monobutyl ether | 0.44 |

In the preparation of each ink, the solvent was stirred using a stirrer while the components shown in Table 2 were added thereto in the order. Further, the ink obtained after stirring was filtrated using a filter with a pore size of φ5 μm to remove foreign substances, debris, and coarse particles.

(Evaluation of ink)

For the inks according to Examples and Comparative Examples, the image density and preservation stability were evaluated.

·Method of evaluating image density

In the evaluation of image density, an inkjet recording apparatus (line-type, manufactured by KYOCERA Document Solutions Inc.) was used as a tester and copy paper ("CC90" manufactured by Mondi plc) was used as a recording medium. The ink tank for black in the tester was filled with each ink. The amount of ink to be ejected from one recording head in the tester was set to 11.5 pL. A 2.3 cm × 11.5 cm solid image was formed on the recording medium using the tester under conditions of a temperature of 32°C and a relative humidity of 50% RH.

After preserving the recording medium on which the image has been formed in a normal temperature and normal humidity environment for one day and one night, the density of the region where the image was formed was measured using a spectrodensitometer (FD-5, manufactured by Konica Minolta, Inc.), and the average value of the densities at three points in the solid image was used as an evaluation value for the image density of each ink. The measurement conditions were the observation light source D50, the illumination condition M2, the field of view of 2°, and the density status I. By using the evaluation value for the image density of each ink, the image density was evaluated in accordance with the following A, B, and C criteria. Inks with the evaluation for image density of A or B are evaluated to "Pass" and inks with the evaluation of C are evaluated to "Fail".

A (Good): 1.5 or more
B (Acceptable): 1.18 or more and less than 1.5
C (Poor): less than 1.18

·Method of evaluating preservation stability

In the evaluation of preservation stability, first, an E-type viscometer ("TV-100EL" manufactured by TOKISANGYO) was used to measure the viscosity (initial viscosity V1) of each ink. Next, approximately 30g of each ink was added to a 50 mL container, and each of the containers was sealed, placed in a constant-temperature chamber set to 60°C, and preserved for one month. Subsequently, the containers were taken out of the constant-temperature chamber and allowed to stand at room temperature for 3 hours.

After that, each ink was taken out of each container, and the viscosity (post-treatment viscosity V2) was measured using the above-mentioned vibration type viscometer. The viscosity change ratio [%] was calculated using the following formula on the basis of the measured initial viscosity V1 and the post-treatment viscosity V2.

$$\texttt{Viscosity change ratio [\%] = 100 × (V1 - V2) / V1}$$

The calculated viscosity change ratio was used as an evaluation value for preservation stability of each ink. By using the evaluation value for preservation stability of each ink, the preservation stability was evaluated in accordance with the following A and B criteria. Inks with the evaluation for preservation stability of A are evaluated to "Pass" and inks with the evaluation of B are evaluated to "Fail".

A (Good): 5% or less
B (Poor): exceeding 5%

·Evaluation results

The measurement results of the image density and preservation stability of the inks according to Examples and Comparative Examples are shown in Table 4.

(Table 4)

|  |  | Image concentration | | Preservation stability | |
|---|---|---|---|---|---|
|  |  | Evaluation value | Determination | Evaluation value(%) | Determination |
| Example | 1 | 1.2 | B | 1 | A |
|  | 2 | 1.5 | A | 3 | A |
|  | 3 | 1.6 | A | 4 | A |
|  | 4 | 1.5 | A | 2 | A |
|  | 5 | 1.7 | A | 2 | A |
|  | 6 | 1.5 | A | 3 | A |
|  | 7 | 1.5 | A | 3 | A |

(continued)

| | | | Image concentration | | Preservation stability | |
|---|---|---|---|---|---|---|
| | | | Evaluation value | Determination | Evaluation value(%) | Determination |
| Comparative Example | 1 | | 1.09 | C | 1 | A |
| | 2 | | 1.8 | A | 10 | B |
| | 3 | | 1.5 | A | 8 | B |
| | 4 | | 1.6 | A | 6 | B |
| | 5 | | - | - | - | - |

For all of the inks according to Examples 1 to 7, the image density and the preservation stability were both evaluated to "Pass". Further, in the inks according to Examples 2 to 7, particularly high image density was achieved. This is presumably because in the inks according to Examples 2 to 7 in which the water-soluble solvent b has high hydrophobicity, the effect of the pigment c agglomerating on the recording medium was particularly effectively achieved.

Meanwhile, for the ink according to Comparative Example 1, the image density was evaluated to "Fail". This is presumably because in the ink according to Comparative Example 1 in which the water-soluble solvent b has high hydrophilicity, the effect of the pigment c agglomerating on the recording medium was not achieved.

For the ink according to Comparative Example 2, the preservation stability was evaluated to "Fail". This is presumably because in the ink according to Comparative Example 2 in which the water-soluble solvent b has high hydrophobicity, the pigment c agglomerated in the solvent.

For the ink according to Comparative Example 3, the preservation stability was evaluated to "Fail". This is presumably because in the ink according to Comparative Example 3 in which the surfactant a has fewer ethylene oxide chains, the dispersion of the pigment c in the solvent was unstable.

For the ink according to Comparative Example 4, the preservation stability was evaluated to "Fail". This is presumably because in the ink according to Comparative Example 4 in which the surfactant a has a large amount of ethylene oxide chains, the surfactant a entangled with a plurality of pigments c and the dispersion of the pigment c in the solvent was unstable.

In Comparative Example 5, the surfactant a was not dissolved in the solvent and the evaluation could not be performed. This is presumably because in Comparative Example 5, the surfactant a has butylene oxide chains, which are hydrophobic groups, too much, resulting in insufficient solubility in water.

**Claims**

1.  An ink, comprising:

    a surfactant represented by the following general formula (1);
    a water-soluble solvent having a log Kow of -1.0 or more and 0.85 or less;
    a pigment; and
    water,
    a content of the water-soluble solvent being 20 mass% or more and 50 mass% or less:
    (Chem. 1)
    (wherein, in the general formula (1), x represents an

    $$HO[CH_2CH_2O]x\text{-}[CH_2CH_2CH_2CH_2O]y\text{-}[CH_2CH_2O]xOH \cdots \qquad (1)$$

    integer of 4 or more and 10 or less, and y represents an integer of 1 or more and 5 or less).

2.  The ink according to claim 1, wherein
    the water-soluble solvent has a log Kow of 0.4 or more and 0.85 or less.

Europäisches
Patentamt
European
Patent Office
Office européen
des brevets

**EUROPEAN SEARCH REPORT**

Application Number

**EP 25 19 7057**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 6 687899 B2 (RICOH CO LTD) 28 April 2020 (2020-04-28) * claims; examples * ----- | 1,2 | INV. C09D11/322 C09D11/38 |
| A | EP 3 239 255 A1 (KAO CORP [JP]) 1 November 2017 (2017-11-01) * claims; examples * ----- | 1,2 | |

TECHNICAL FIELDS
SEARCHED    (IPC)

C09D

The present search report has been drawn up for all claims

| Place of search | Date of completion of the search | Examiner |
|---|---|---|
| Munich | 22 December 2025 | Zeslawski, Wojciech |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................................
& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 25 19 7057

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2025

| Patent document cited in search report | | Publication date | Patent family member(s) | | Publication date |
|---|---|---|---|---|---|
| JP 6687899 | B2 | 28-04-2020 | JP | 6687899 B2 | 28-04-2020 |
| | | | JP | 2018039957 A | 15-03-2018 |
| EP 3239255 | A1 | 01-11-2017 | CN | 107001835 A | 01-08-2017 |
| | | | EP | 3239255 A1 | 01-11-2017 |
| | | | JP | 6677376 B2 | 08-04-2020 |
| | | | JP | 2016125057 A | 11-07-2016 |
| | | | KR | 20170100506 A | 04-09-2017 |
| | | | US | 2017369725 A1 | 28-12-2017 |
| | | | WO | 2016104294 A1 | 30-06-2016 |

EPO FORM P0459

For more details about this annex : see Official Journal of the European Patent Office, No. 12/82

# EP 4 703 441 A1

**Patent documents cited in the description**

- JP 6687899 B